# EUROPÄISCHE PATENTSCHRIFT

(11) **EP 2 897 833 B1**
(45) Veröffentlichungstag und Bekanntmachung des Hinweises auf die Patenterteilung: **04.07.2018**
(21) Anmeldenummer: 13765722.7
(22) Anmeldetag: 19.09.2013
(51) Int. Cl.: B60L 11/18, B60L 1/00, B60L 7/10, B60W 10/26, H02J 7/14, H02J 7/34, B60R 16/033

(54) **KOPPELSPEICHERVORRICHTUNG FÜR EIN KRAFTFAHRZEUG**
COUPLING STORE DEVICE FOR A MOTOR VEHICLE
DISPOSITIF ACCUMULATEUR DE COUPLAGE POUR VÉHICULE

(30) Priorität: 24.09.2012 DE 102012217190
(43) Veröffentlichungstag der Anmeldung: 29.07.2015
(73) Patentinhaber: Bayerische Motoren Werke Aktiengesellschaft, 80809 München (DE)
(72) Erfinder: SCHINDLER, Moritz, 80809 München (DE); SCHÄCK, Stefan, 80805 München (DE)
(86) Internationale Anmeldenummer: PCT/EP2013/069487
(87) Internationale Veröffentlichungsnummer: WO 2014/044763

(56) Entgegenhaltungen:
- EP-A1- 1 595 748
- EP-A2- 2 272 722
- DE-A1-102010 062 116
- US-A1- 2004 201 365

## Beschreibung

Die Erfindung betrifft ein Kraftfahrzeug mit einem Generator, mit elektrischen Verbrauchern, mit einem ersten elektrischen Energiespeicher und mit einem zu dem ersten elektrischen Energiespeicher parallel geschalteten zweiten elektrischen Energiespeicher, wobei die beiden elektrischen Energiespeicher im Spannungsbereich zumindest teilweise überlappende Ruhespannungskennlinien aufweisen, der erste Energiespeicher eine erste ladezustandsabhängige Ladeinnenwiderstandskennlinie aufweist, der zweite Energiespeicher eine zweite ladezustandsabhängige Ladeinnenwiderstandskennlinie aufweist, der erste Energiespeicher einer erste ladezustandsabhängige Entladeinnenwiderstandskennlinie aufweist und der zweite Energiespeicher eine zweite ladezustandsabhängige Entladeinnenwiderstandskennlinie aufweist.

Nach der Schrift DE 10 2009 008 177 A1 wird bei Fahrzeugen mit einer Vielzahl von elektrischen Verbrauchern die elektrische Energieversorgung von einer oder von mehreren Batterien bzw. von einem Generator sichergestellt. Es wird eine Bordnetzarchitektur mit zwei Energiespeichern vorgeschlagen, die über einen Koppelelement elektrisch parallel schaltbar sind. Das Koppelelement wird in Abhängigkeit vom Zustand der Zündung eingestellt, um in jedem Betriebszustand des Fahrzeugs eine hohe Verfügbarkeit der Verbraucher sicherzustellen und einen Startspannungseinbruch im Bordnetz bei Motorstarts, insbesondere bei einer MotorStart-Stopp-Funktion, zu vermeiden.

Die Schrift EP 2 272 722 A2 behandelt ein 2-Energiespeicher-Bordnetz, umfassend eine Blei-Säure-Batterie und eine Lithium-Batterie, das statt einem DC/DC-Wandler zwischen den Speichern ein elektromagnetisches Relais vorsieht.

Die Schrift DE 10 2010 062 116 A1 beschreibt ein 2-Energiespeicher-Bordnetz für ein Fahrzeug mit zwei permanent parallel geschalteten Energiespeichern, deren Spannungskennlinien teilweise überlappen.

Es ist eine Aufgabe der Erfindung, ein verbessertes Kraftfahrzeug zu beschreiben mit einem Generator, mit elektrischen Verbrauchern, mit einem ersten elektrischen Energiespeicher und mit einem zu dem ersten elektrischen Energiespeicher parallel geschalteten zweiten elektrischen Energiespeicher, wobei die beiden elektrischen Energiespeicher im Spannungsbereich zumindest teilweise überlappende Ruhespannungskennlinien aufweisen, der erste Energiespeicher eine erste ladezustandsabhängige Ladeinnenwiderstandskennlinie aufweist, der zweite Energiespeicher eine zweite ladezustandsabhängige Ladeinnenwiderstandskennlinie aufweist, der erste Energiespeicher eine erste ladezustandsabhängige Entladeinnenwiderstandskennlinie aufweist und der zweite Energiespeicher eine zweite ladezustandsabhängige Entladeinnenwiderstandskennlinie aufweist.

Gelöst wird diese Aufgabe durch ein Kraftfahrzeug gemäß Anspruch 1.

Vorteilhafte Ausführungsformen und Weiterbildungen der Erfindung ergeben sich aus den abhängigen Ansprüchen.

Erfindungsgemäß verläuft die erste Ladeinnenwiderstandskennlinie über einem gesamten relativen Ladezustandsbereich in Richtung höherer Widerstände im Wesentlichen oberhalb der zweiten Ladeinnenwiderstandskennlinie und die erste Entladeinnenwiderstandskennlinie über einem gesamten relativen Ladezustandsbereich in Richtung höherer Widerstände im Wesentlichen unterhalb der zweiten Entladeinnenwiderstandskennlinie, wobei die beiden Energiespeicher spannungsneutral miteinander verschaltet sind.

Die beschriebenen relativen Lagen der Ladeinnenwiderstandskennlinien bzw. der Entladeinnenwiderstandskennlinien können in den Randbereichen des relativen Ladezustandsbereichs, d.h. bei und nahe bei 0 % relativem Ladezustand sowie bei und nahe bei 100 % relativem Ladezustand (state-of-charge, SoC) Anomalitäten aufweisen, die in diesen Randbereichen einen anderen Verlauf als den beschriebenen wesentlichen Verlauf zeigen. Die Vorteile und Effekte der Erfindung bleiben durch diese Anomalitäten unbeeinflusst, so dass die Anomalitäten die Erfindung nicht einschränken. Als Beispiel kann etwa ein starker Anstieg der Entladeinnenwiderstandskennlinie bei einer Blei-Säure-Batterie als erstem Energiespeicher gegen den Ladezustand 0 % erwähnt werden, der möglicherweise die Entladeinnenwiderstandskennlinie einer Lithium-Ionen-Batterie als zweitem Energiespeicher gegen den Ladezustand 0 % in Richtung höherer Widerstände übersteigt. Im Wesentlichen verläuft die Entladeinnenwiderstandskennlinie der Blei-Säure-Batterie in Richtung höherer Widerstände jedoch unterhalb der Entladeinnenwiderstandskennlinie der Entladeinnenwiderstandskennlinie der Lithium-Ionen-Batterie, womit erfindungswesentliche Eigenschaften verknüpft sind.

Außerdem beziehen sich die Betrachtungen der Widerstandskennlinien auf einen Temperaturbereich, der bei einer Anwendung im Automobilbau als typischer Temperaturbereich für einen Energiespeicher betrachtet wird, d.h. auf etwa - 20 °C bis etwa + 60 °C.

Eine spannungsneutrale Verschaltung bedeutet, dass im Wesentlichen eine direkte galvanische Verbindung zwischen den beiden Energiespeichern besteht. Insbesondere sind zwischen den beiden Energiespeichern nicht notwendigerweise spannungsvermittelnde oder spannungskoppelnde Bauelemente befindlich wie ein Schalter, ein Relais oder ein Gleichstromsteller. Durch die Parallelschaltung der beiden Speicher sind diese in jedem Betriebspunkt also auf dem gleichen elektrischen Potential. I.f. wird diese Spannung als Koppelspannung bezeichnet.

Nach einer bevorzugten Ausführungsform der Erfindung weist der erste elektrische Energiespeicher bei näherungsweise vollgeladenem Zustand eine Ruhespannung auf, die im Wesentlichen einem im unteren bis mittleren Bereich liegenden relativen Ladezustand des zweiten Energiespeichers entspricht.

Dies bedeutet, dass die beiden Energiespeicher derart ausgeführt sind, dass der vollgeladene Zustand des ersten Energiespeichers zu einer Koppelspannung führt, bei welcher der zweite Energiespeicher in einem unteren bis mittleren Ladezustandsbereich befindlich ist. Der untere bis mittlere Ladezustandsbereich kann etwa mit 5 %-60 % relativem Ladezustand beziffert werden.

Weiterhin bedeutet es einen technischen Vorteil, wenn das Kraftfahrzeug ein Steuergerät und einen Batteriesensor umfasst, der Batteriesensor dem zweiten Energiespeicher zugeordnet ist und durch zeitliche Integration eines Ladestroms und eines Entladestroms des zweiten Energiespeichers der Ladezustand des zweiten Energiespeichers mit Hilfe des Batteriesensors und/oder des Steuergeräts ermittelbar ist.

Nach einer bevorzugten Variante der Erfindung ist durch das Steuergerät ein generatorischer Ladestrom der Energiespeichervorrichtung einstellbar und ein verbraucherbezogener Entladestrom der Energiespeichervorrichtung einstellbar, wobei der zweite elektrische Energiespeicher in einem zeitlichen Verlauf in einem vorgegebenen Sollladezustandsbereich betrieben wird und der Sollladezustandsbereich in dem im Wesentlichen unteren bis mittleren Ladezustandsbereich des zweiten Energiespeichers befindlich ist.

Es wird also der zweite Energiespeicher in einem vorgegebenen Ladezustandsbereich betrieben, der im Bereich unterer bis mittlerer Ladezustände des zweiten Energiespeichers befindlich ist. Dies bedeutet, dass der erste Energiespeicher bei diesem Betrieb näherungsweise vollgeladen ist.

Außerdem ist es sehr vorteilhaft, wenn bei einem Kraftfahrzeug mit einer Bremsenergierückgewinnungsfunktion in einer Rekuperationsphase durch das Steuergerät ein generatorischer Ladestrom einstellbar ist, der in einem zeitlichen Verlauf zu einem Ladezustand des zweiten Energiespeichers führt, der in Richtung höherer Ladezustände oberhalb des Sollladezustandsbereichs liegt, und in Fahrphasen, die keine Rekuperationsphasen darstellen, von dem Steuergerät ein generatorischer Ladestrom und ein verbraucherbezogener Entladestrom derart eingestellt werden, dass der Ladestrom und der Entladestrom den Ladezustand des zweiten elektrischen Energiespeichers in einem zeitlichen Verlauf in den Sollladezustandsbereich führen oder den Ladezustand des zweiten elektrischen Energiespeichers in einem zeitlichen Verlauf in dem Sollladezustandsbereich halten.

Falls das Kraftfahrzeug alternativ oder zusätzlich zu der Bremsenergierückgewinnungsfunktion über eine Motor-Stopp-Start-Automatik verfügt, ist eine vorteilhafte Variante der Erfindung gegeben, wenn in einer Motor-Stopp-Phase durch das Steuergerät ein Entladestrom einstellbar ist, der in einem zeitlichen Verlauf zu einem Ladezustand des zweiten Energiespeichers führt, der in Richtung höherer Ladezustände unterhalb des Sollladezustandsbereichs liegt, und wenn in Fahrphasen, die keine Motor-Stopp-Phase darstellen, von dem Steuergerät ein generatorischer Ladestrom und ein verbraucherbezogener Entladestrom derart eingestellt werden, dass der Ladestrom und der Entladestrom den Ladezustand des zweiten elektrischen Energiespeichers in einem zeitlichen Verlauf in den Sollladezustandsbereich führen oder den Ladezustand des zweiten elektrischen Energiespeichers in einem zeitlichen Verlauf in dem Sollladezustandsbereich halten.

Die Erfindung beruht auf den nachfolgend dargelegten Überlegungen:
Ausgangspunkt ist ein konventionelles Fahrzeug mit einer einzelnen Blei-Säure-Batterie als Energiespeicher für das Basisbordnetz, wobei das Fahrzeug gegebenenfalls mit Micro-Hybrid-Funktionalitäten wie einer Bremsenergierückgewinnungsfunktion (BER) mit einer automatischen Motor-Stopp-Start-Automatik (MSA) ausgestattet ist.

Betriebsstrategien für das konventionelle Bordnetz können darin bestehen, die Lebensdauer der Blei-Säure-Batterie (BSB) zu maximieren. Dies ist bei der dem Fachmann bekannten BSB-Technologie insbesondere bei dauerhafter Vollladung der BSB zu erreichen, d.h. bei Anwendung einer Vollladestrategie. Um jedoch die Möglichkeit der Rekuperation von aus kinetischer Energie gewandelter elektrischer Energie auch mit der BSB zu eröffnen, wird ein gezielt teilentladener Betrieb der BSB gewählt, der sich nachteilig auf die Lebensdauer der BSB auswirken kann. Dies kann sich in ungünstigen Betriebszuständen besonders nachteilig bemerkbar machen, wenn der Ladezustand der BSB zusätzlich durch häufige Stoppphasen durch die MSA und durch übermäßige Entladung in der Abstell- und Nachlaufphase des Fahrzeugs gesenkt wird.

Moderne 2-Batterien-Konzepte verfügen über Energiespeicher unterschiedlicher chemischer Technologien wie etwa über die Kombination einer Blei-Säure-Batterie mit einer Lithium-Ionen-Batterie (LiB).

Bei spannungsneutral parallel geschalteten Energiespeichern, d.h. bei einer direkten galvanischen Verbindung stellt sich eine den Energiespeichern gemeinsame Spannung ein, die als Koppelspannung bezeichnet wird.

Für eine solche Energiespeichervorrichtung wird eine geschickte und zugleich robuste Betriebsstrategie vorgeschlagen. Diese Betriebsstrategie ermöglicht es, die spezifischen Vorteile der beiden Energiespeicher der Energiespeichervorrichtung zu nutzen.

Im Folgenden wird ein bevorzugtes Ausführungsbeispiel der Erfindung beschrieben. Daraus ergeben sich weitere Details, bevorzugte Ausführungsformen und Weiterbildungen der Erfindung. Es zeigen schematisch
Fig. 1 die Ruhespannungslage von zwei Energiespeichern in einem Koppelspeichersystem,
Fig. 2 die Ruhespannungskennlinien der beiden Energiespeicher in Abhängigkeit vom relativen Ladezustand,
Fig. 3 die Ladeinnenwiderstandskennlinien der beiden Energiespeicher und
Fig. 4 die Entladeinnenwiderstandskennlinien der beiden Energiespeicher.

Gemäß einem Ausführungsbeispiel umfasst das elektrische Bordnetz eines Kraftfahrzeugs neben einem verbrennungsmotorisch getriebenen Generator einen Starter für den Verbrennungsmotor und eine Vielzahl von elektrischen Verbrauchern. Sowohl als Energiequellen wie als Energiesenken dienen in dem Bordnetz mindestens zwei parallel geschaltete elektrische Energiespeicher. Diese weisen bevorzugt eine direkte galvanische Verbindung auf, d.h. die Energiespeicher können dauerhaft parallel geschaltet betrieben werden. Insbesondere müssen keine spannungskoppelnden Elemente zwischen den Energiespeichern wie Gleichstromsteller, Trennschalter, Relais, etc. zum Einsatz kommen. Es wird weiterhin ein System aus zwei dauerhaft parallelen Energiespeichern betrachtet, das i.f. als Koppelspeichersystem bezeichnet wird.

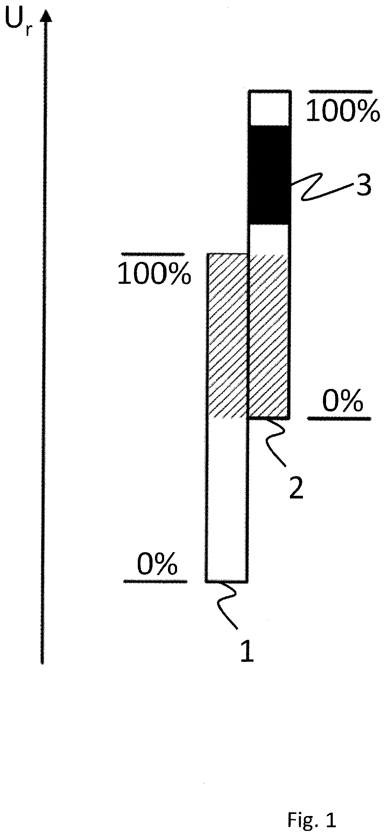

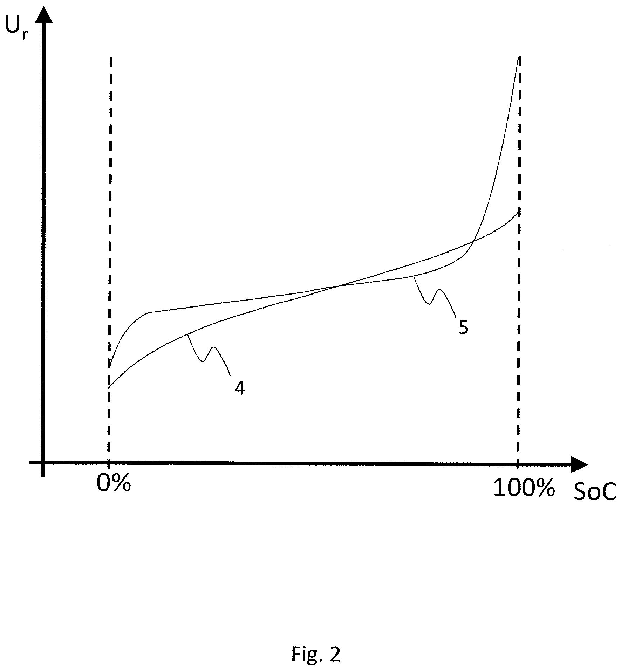

Jeder der beiden Speicher weist eine Ruhespannungskennlinie in Abhängigkeit von dem jeweiligen relativen Ladezustand des Speichers auf. Die beiden Speicher sind derart ausgewählt, dass über den gesamten Bereich des relativen Ladezustands sich die Ruhespannungskennlinie (Uᵣ) des ersten Energiespeichers (1) mit der Ruhespannungskennlinie des zweiten Energiespeichers (2) zumindest teilweise überschneidet, siehe Überlappungsbereich (3) der Spannungen in Fig. 1 schraffiert dargestellt. Dies bedeutet, dass es jeweils einen Ladezustandsbereich eines Speichers gibt, dem ein Spannungsbereich der jeweiligen Ruhespannungskennlinie zugeordnet ist, den der jeweils andere Speicher nicht abdeckt und es jeweils einen Ladezustandsbereich eines Speichers gibt, dem ein Spannungsbereich der jeweiligen Ruhespannungskennlinie zugeordnet ist, den der jeweils andere Speicher ebenfalls abdeckt. Der Verlauf der Ruhespannungskennlinie des ersten Speichers (4) und der Verlauf der Ruhespannungskennlinie des zweiten Speichers (5) sind in Fig. 2 gegen den relativen Ladezustand der Speicher dargestellt.

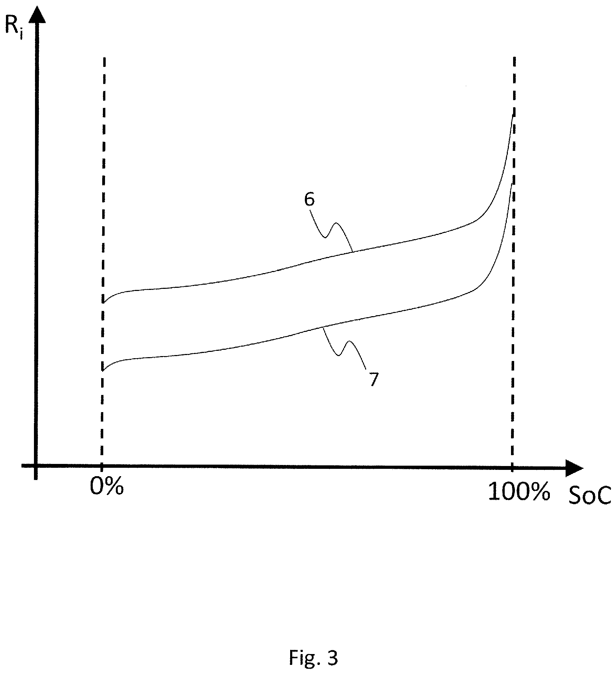

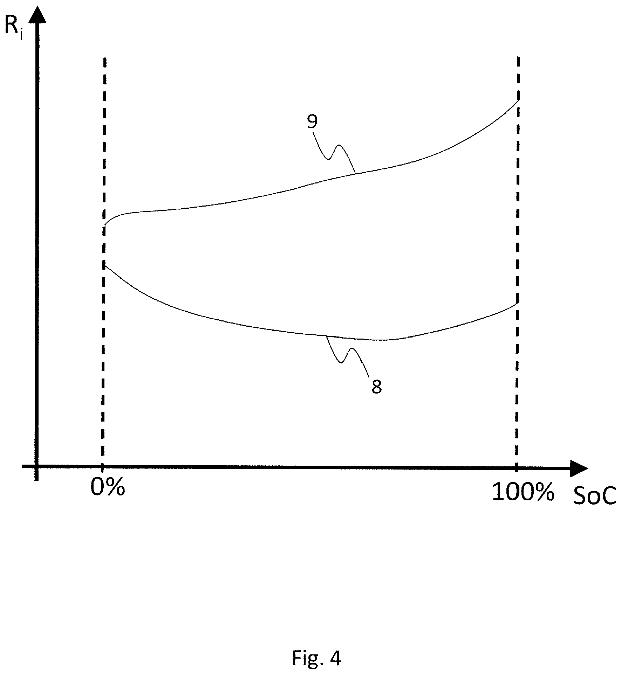

Beide Energiespeicher weisen jeweils eine ladezustandsabhängige Ladeinnenwiderstandskennlinie und eine ladezustandsabhängige Entladeinnenwiderstandskennlinie auf. Der Innenwiderstand wird als Rᵢ angegeben. Die Ladeinnenwiderstandskennlinie des ersten Energiespeichers (6, in Fig. 3) liegt im Wesentlichen im gesamten relativen Ladezustandsbereich von 0 % state-of-charge (SoC) bis 100 % SoC in Richtung höherer Widerstände oberhalb der Ladeinnenwiderstandskennlinie des zweiten Energiespeichers (7, in Fig. 3). Die Entladeinnenwiderstandskennlinien zeigen einen inversen Verlauf, d.h. die Entladeinnenwiderstandskennlinie des ersten Energiespeichers (8, in Fig. 4) liegt im Wesentlichen im gesamten relativen Ladezustandsbereich unterhalb der Entladeinnenwiderstandskennlinie des zweiten Energiespeichers (9, in Fig. 4).

Beispielhaft können als Energiespeicher für das Koppelspeichersystem ohne Beschränkung der Allgemeinheit eine Blei-Säure-Batterie (BSB) in Nasstechnologie oder in AGM-Technologie als erster Energiespeicher mit einer Ruhespannungslage von 10,5 Volt bis ca. 13,0 Volt und eine Lithium-Ionen-Batterie (LiB) als zweiter Energiespeicher angeführt werden. Die LiB ist beispielsweise aus einer Reihenschaltung von vier Zellen des elektrochemischen Redoxsystems Lithium-Eisenphosphat (LiFePO₄)/Graphit bei einer Ruhespannungslage von 10,4 Volt bis 14,0 Volt, von vier Zellen des elektrochemischen Redoxsystems Lithium-Nickel-Mangan-Cobalt (Li-NₓM_{y}C_{z})/Graphit bei einer Ruhespannungslage von 12,6 Volt bis 16,4 Volt oder von sechs Zellen des elektrochemischen Redoxsystems Lithium-Nickel-Mangan-Cobalt (Li- NₓM_{y}C_{z})/Lithium-Titanat (LiₓTi_{y}O_{z}) bei einer Ruhespannungslage von 12,0 Volt bis 15,6 Volt aufgebaut. Der zweite Energiespeicher kann auch als Superkondensator ausgeführt sein.

Ohne Beschränkung auf eine der dargestellten Varianten wird weiterhin die Ausführung der LiB mit dem System Lithium-Eisenphosphat/Graphit betrachtet. Vorgeschlagen wird dabei ein System mit beispielhaften Nennkapazitäten der LiB von 5-20 Ah und der BSB von 70-90 Ah.

Der LiB ist ein Batteriesensor zugeordnet, der zumindest unidirektional mit einem Steuergerät des Fahrzeugs Informationen austauscht. Der Batteriesensor misst insbesondere wiederholt den Ladestrom und Entladestrom des zweiten Energiespeichers. Dadurch ist durch den Batteriesensor oder durch das Steuergerät in Form einer zeitlichen Integration des Stroms des zweiten Energiespeichers, der aus Ladeströmen und Entladeströmen gebildet wird, eine zeitabhängige Ermittlung des Ladezustands des zweiten Energiespeichers insbesondere während des Betriebs der Energiespeichervorrichtung ermöglicht.

Bei dem Koppelspeichersystem liegt zu jedem Betriebszeitpunkt infolge der direkten galvanischen Verbindung das gleiche elektrische Potential an, das als Koppelspannung bezeichnet wird.

Die BSB weist in einem Ladezustandsbereich von ca. 0 % bis 100 % einen Ruhespannungsbereich von ca. 10,5 Volt bis 13,0 Volt auf. Die LiB weist in einem Ladezustandsbereich von ca. 0 % bis 80 % einen Ruhespannungsbereich von ca. 10,4 Volt bis 13,2 Volt auf, wobei sich der gesamte Ladezustandsbereich von ca. 25 % bis 80 % nahezu bei einer Ruhespannungslage von 13,2 Volt befindet. Bei einer Ruhespannung von 13,0 Volt liegt der Ladezustand der LiB etwa bei 15 %.

Ziel ist es, die LiB gem. Fig. 1 in einem Sollladezustandsband (3), das in einem unteren bis mittleren Ladezustandsbereich von etwa 5 % bis 60 % liegt, zu betreiben. Damit liegt der Ladezustand der BSB dauerhaft im Bereich der Vollladung.

Dieses Solladezustandsband bietet insbesondere bei Fahrzeugen mit einer Rekuperationsfunktion zur Bremsenergierückgewinnung (BER) und mit einer automatischen Motor-Stopp-Start-Funktion (MSA) des Verbrennungsmotors technische Vorteile.

Bei der BER wird eine kurzfristige Anhebung der Spannung am Generatorausgang durch kurzzeitiges Abgreifen eines erhöhten Drehmoments von der Antriebswelle des Motors erreicht. Das kurzfristige Abgreifen ist dabei auf Schlepphasen und Bremsphasen gerichtet, in denen der Motor ohne eigenen Antrieb durch die kinetische Energie des Fahrzeugs mitgeschleppt wird. Anstatt einer Umwandlung der kinetischen Energie in Wärme in einer Bremsanlage des Fahrzeugs kann die überschüssige kinetische Energie in elektrische Energie gewandelt werden und im Koppelspeichersystem gespeichert werden. Je günstiger die Stromaufnahme des Koppelspeichersystems ist, umso effizienter kann dieser Umwandlung erfolgen.

Bei der Funktion MSA wird der Verbrennungsmotor bei Stoppphasen des Fahrzeugs während des laufenden Fahrbetriebs (z.B. bei einer Rotphase an einer Verkehrsampel) abgestellt und zum Beginn einer folgenden Fahrphase automatisch wieder gestartet. Während einer MSA-Stoppphase gibt der Generator keine elektrische Leistung ab, so dass die elektrischen Verbraucher vom Koppelspeichersystem elektrisch gespeist werden.

Die maximale Ladespannung des Koppelspeichersystems beträgt ohne Beschränkung der Allgemeinheit 14,80 Volt. Bei der BSB tritt bei einem Überpotential ab 400 - 500 mV über der Ruhespannungslage nennenswert Ladung der Batterie auf, bei der LiB etwa schon bei < 100 mV Überpotential über der Ruhespannungslage.

Somit ist mit dem Koppelspeichersystem in dem gewählten Sollladezustandsband erreicht, dass beim Eintreten einer Rekuperationsphase die LiB aufgrund der Ladeinnenwiderstandskennlinie eine hohe Stromaufnahme aufweist und die gesamte Rekuperationsenergie von der LiB aufgenommen wird. Falls die Rekuperationsphase zu einem Ladezustand der LiB führt, der das Ladezustandsband überschreitet, kann die LiB, um wieder zu einem Ladezustand geführt zu werden, der in dem Sollladezustandsband liegt, aktiv entladen werden und dadurch der Generator entlastet werden. Die am Generator ausgegebene elektrische Leistung wird als gesenkt und die LiB durch elektrische Verbraucher entladen.

Bei einem automatischen Motorstopp durch die Funktion MSA mit anschließendem Warmstart werden beide Energiespeicher bei einem Verbraucherstrom in einer Größenordnung von 50-100 A teilweise entladen. Bei der anschließenden Hochstrombelastung des Koppelspeichersystems durch den Starter des Fahrzeugs führt der geringe Entladeinnenwiderstand der BSB zu einer kurzfristig starken Entladung der BSB. Der Spannungseinbruch der BSB wird durch die sich mit einer deutlich geringeren Rate als die BSB entladenden LiB gestützt, d.h. die Koppelspannung erfährt einen deutlich geringeren Spannungseinbruch als dies bei einer einzelnen BSB üblicherweise der Fall ist. Die spannungsstützende Funktion der LiB beruht darauf, dass die LiB zum Beginn der Motorstoppphase in dem Sollladezustandsband befindlich ist und bei einem gewöhnlichen MSA-Betrieb nach der Motorstoppphase bei der Durchführung des Warmstarts einen Restladezustand aufweist, der die Koppelspannung stützt.

Falls die MSA-Stoppphase mit anschließendem Motorstart zu einem Ladezustand der LiB führt, der das Ladezustandsband unterschreitet, kann die LiB, um wieder zu einem Ladezustand geführt zu werden, der in dem Sollladezustandsband liegt, aktiv geladen werden. Bevorzugt geschieht dies durch Rekuperation. Die geringere Koppelspannung in diesem Zustand begünstigt die Effizienz der Rekuperation, da die während einer Rekuperationsphase anlegbare Spannung zu einem höheren Ladeüberpotential führt. Hilfsweise wird die am Generatorausgang abgegebene Leistung außerhalb der Rekuperationsphasen zusätzlich erhöht, um den Ladestrom der LiB zur erhöhen und in das Ladezustandsband zurückzuführen.

Durch den Betrieb des Koppelspeichersystems in dem Ladezustandsband ist eine einfache und robuste Betriebsstrategie umsetzbar. Diese erfordert lediglich eine Ladebilanzierung der LiB während des Fahrbetriebs und einen bezüglich der Ausgangsleistung regelbaren Generator. Um die LiB in dem Sollladezustandsband zu halten, kann ein einfacher PI-Regler zum Einsatz kommen.

Diese Betriebsstrategie vereint die spezifischen Vorteile der BSB und der LiB. Einerseits ist der geringe Entladeinnenwiderstand der BSB nahe dem Vollladezustand der BSB vorteilhaft um, eine kurzfristig hohe Stromabgabe beim Warmstart zu gewährleisten. Dabei stützt die LiB die Spannung im Bordnetz vor einem Startspannungseinbruch, da diese - infolge ihres unteren bis mittleren Ladezustands - höhere Ruhespannung als die BSB aufweist, die als Überpotential für die BSB wirkt.

Bei der Rekuperation ist die LiB in einem teilentladenen Zustand, d.h. stromaufnahmefähig bei einem geringen Ladeinnenwiderstand im Vergleich zur vollgeladenen BSB. Die Rekuperation ist in diesem Betriebszustand sehr effektiv.

## Patentansprüche

1. Kraftfahrzeug mit einem Generator, mit elektrischen Verbrauchern, mit einem ersten elektrischen Energiespeicher (1) und mit einem zu dem ersten elektrischen Energiespeicher parallel geschalteten zweiten elektrischen Energiespeicher (2), wobei die beiden elektrischen Energiespeicher im Spannungsbereich zumindest teilweise überlappende Ruhespannungskennlinien (3; 4,5) aufweisen, der erste Energiespeicher eine erste ladezustandsabhängige Ladeinnenwiderstandskennlinie (6) aufweist, der zweite Energiespeicher eine zweite ladezustandsabhängige Ladeinnenwiderstandskennlinie (7) aufweist, der erste Energiespeicher eine erste ladezustandsabhängige Entladeinnenwiderstandskennlinie (8) aufweist und der zweite Energiespeicher eine zweite ladezustandsabhängige Entladeinnenwiderstandskennlinie (9) aufweist,
**dadurch gekennzeichnet, dass**
- die erste Ladeinnenwiderstandskennlinie über einem gesamten relativen Ladezustandsbereich in Richtung höherer Widerstände oberhalb der zweiten Ladeinnenwiderstandskennlinie verläuft,
- die erste Entladeinnenwiderstandskennlinie über einem gesamten relativen Ladezustandsbereich in Richtung höherer Widerstände unterhalb der zweiten Entladeinnenwiderstandskennlinie verläuft, und
- die beiden Energiespeicher spannungsneutral miteinander verschaltet sind.

2. Kraftfahrzeug nach Anspruch 1,
**dadurch gekennzeichnet, dass**
- der erste elektrische Energiespeicher bei näherungsweise vollgeladenem Zustand eine Ruhespannung aufweist, die im Wesentlichen einem Ladezustand des zweiten Energiespeichers entspricht, der in einem unteren bis mittleren Bereich relativer Ladezustände liegt.

3. Kraftfahrzeug nach Anspruch 2,
**dadurch gekennzeichnet, dass**
- das Kraftfahrzeug einen Batteriesensor und zumindest ein Steuergerät umfasst,
- der Batteriesensor dem zweiten Energiespeicher zugeordnet ist, und
- durch zeitliche Integration eines Ladestroms und eines Entladestroms des zweiten Energiespeichers der Ladezustand des zweiten Energiespeichers mit Hilfe des Batteriesensors und/oder des zumindest einen Steuergeräts ermittelbar ist.

4. Verfahren für ein Kraftfahrzeug nach Anspruch 3,
**dadurch gekennzeichnet, dass** bei dem Verfahren
- durch das zumindest eine Steuergerät ein generatorischer Ladestrom der Energiespeichervorrichtung einstellbar ist,
- ein verbraucherbezogener Entladestrom der Energiespeichervorrichtung einstellbar ist,
- der Ladestrom und der Entladestrom den zweiten elektrischen Energiespeicher in einem zeitlichen Verlauf in einem Sollladezustandsbereich halten, und
- der Sollladezustandsbereich in dem im Wesentlichen mittleren Ladezustand des zweiten Energiespeichers befindlich ist.

5. Verfahren für ein Kraftfahrzeug nach Anspruch 4, wobei das Kraftfahrzeug über eine Bremsenergierückgewinnungsfunktion verfügt,
- bei welchem in einer Rekuperationsphase durch das zumindest eine Steuergerät ein generatorischer Ladestrom einstellbar ist, der in einem zeitlichen Verlauf zu einem Ladezustand des zweiten Energiespeichers führt, der in Richtung höherer Ladezustände oberhalb des Sollladezustandsbereichs liegt, und
- in Fahrphasen, die keine Rekuperationsphasen darstellen, von dem zumindest einen Steuergerät ein generatorischer Ladestrom und ein verbraucherbezogener Entladestrom derart eingestellt werden, dass der Ladestrom und der Entladestrom den Ladezustand des zweiten elektrischen Energiespeicher in einem zeitlichen Verlauf in den Sollladezustandsbereich führen oder den Ladezustand des zweiten elektrischen Energiespeichers in einem zeitlichen Verlauf in dem Sollladezustandsbereich halten.

6. Verfahren für ein Kraftfahrzeug nach Anspruch 4 oder 5, wobei das Kraftfahrzeug über eine Motor-Stopp-Start-Automatik verfügt,
- bei welchem in einer Motor-Stopp-Phase durch das zumindest eine Steuergerät ein Entladestrom eingestellt wird, der in einem zeitlichen Verlauf zu einem Ladezustand des zweiten Energiespeichers führt, der in Richtung höherer Ladezustände unterhalb des Sollladezustandsbereichs liegt, und
- in Fahrphasen, die keine Motor-Stopp-Phase darstellen, von dem zumindest einen Steuergerät ein generatorischer Ladestrom und ein verbraucherbezogener Entladestrom derart eingestellt werden, dass der Ladestrom und der Entladestrom den Ladezustand des zweiten elektrischen Energiespeicher in einem zeitlichen Verlauf in den Sollladezustandsbereich führen oder den Ladezustand des zweiten elektrischen Energiespeichers in einem zeitlichen Verlauf in dem Sollladezustandsbereich halten.

## Claims

1. A motor vehicle comprising a generator, electrical loads, a first electrical energy store (1), and a second electrical energy store (2) connected in parallel to the first electrical energy store, wherein the two electrical energy stores have at least partially overlapping open-circuit voltage characteristic curves (3; 4, 5) in the voltage range, the first energy store has a first state-of-charge-dependent internal resistance characteristic curve of charge (6), the second energy store has a second state-of-charge-dependent internal resistance characteristic curve of charge (7), the first energy store has a first state-of-charge-dependent internal resistance characteristic curve of discharge (8), and the second energy store has a second state-of-charge-dependent internal resistance characteristic curve of discharge (9),
**characterised in that**
- the first internal resistance characteristic curve of charge extends over an entire relative state-of-charge range in the direction of higher resistances above the second internal resistance characteristic curve of charge,
- the first internal resistance characteristic curve of discharge extends over an entire relative state-of-charge range in the direction of higher resistances below the second internal resistance characteristic curve of discharge, and
- the two energy stores are connected to one another in a voltage-neutral manner.

2. A motor vehicle according to claim 1,
**characterised in that**
- the first electrical energy store, in the approximately fully charged state, has an open-circuit voltage that corresponds substantially to a state of charge of the second energy store which lies in a lower to medium range of relative states of charge.

3. A motor vehicle according to claim 2,
**characterised in that**
- the motorvehicle comprises a battery sensor and at least one control unit,
- the battery sensor is associated with the second energy store, and
- the state of charge of the second energy store can be determined with the aid of the battery sensor and/or the at least one control unit by time-related integration of a charging current and a discharging current of the second energy store.

4. A method for a motor vehicle according to claim 3,
**characterised in that**, in the method
- a regenerative charging current of the energy storage device can be set by the at least one control unit,
- a load-related discharging current of the energy storage device can be set,
- the charging current and the discharging current hold the second electrical energy store in a time-dependent course in a desired state-of-charge range, and
- the desired state-of-charge range is in substantially the medium state of charge of the second energy store.

5. A method for a motorvehicle according to claim 4, wherein the motor vehicle has a braking energy recovery function,
- in which, in a recovery phase, a regenerative charging current can be set by the at least one control device, which charging current, in a time-dependent course, leads to a state of charge of the second energy store which lies above the desired state-of-charge range in the direction of higher states of charge, and
- in driving phases which are non-recovery phases a regenerative charging current and a load-related discharging current are set by the at least one control unit, in such a way that the charging current and the discharging current lead the state of charge of the second electrical energy store in a time-dependent course into the desired state-of-charge range or hold the state of charge of the second electrical energy store in a time-dependent course in the desired state-of-charge range.

6. A method for a motor vehicle according to claim 4 or 5, wherein the motor vehicle has an automatic engine stop-start system
- wherein in an engine stop phase a discharging current is set by the at least one control unit and leads in a time-dependent course to a state of charge of the second energy store which lies below the desired state-of-charge range in the direction of higher states of charge, and
- in driving phases which are not engine stop phases a regenerative charging current and a load-related discharging current are set by the at least one control unit, in such a way that the charging current and the discharging current lead the state of charge of the second electrical energy store in a time-dependent course into the desired state-of-charge range or hold the state of charge of the second electrical energy store in a time-dependent course in the desired state-of-charge range.

## Revendications

1. Véhicule comprenant un générateur, des consommateurs électriques, un premier accumulateur d'énergie électrique (1) et un second accumulateur d'énergie électrique (2) branché parallèlement au premier accumulateur d'énergie électrique, les deux accumulateurs d'énergie électrique ayant, dans la plage de tension, des courbes caractéristiques de tension de repos (3 ; 4, 5) se chevauchant au moins partiellement, le premier accumulateur d'énergie ayant une première courbe caractéristique de résistance interne de charge (6) en fonction de l'état de charge, le second accumulateur d'énergie ayant une seconde courbe caractéristique de résistance interne de charge (7) en fonction de l'état de charge, le premier accumulateur d'énergie ayant une première courbe caractéristique de résistance interne de décharge (8) en fonction de l'état de charge et le second accumulateur d'énergie ayant une seconde courbe caractéristique de résistance interne de décharge (9) en fonction de l'état de charge,
**caractérisé en ce que**
- la première courbe caractéristique de résistance interne de charge est située, sur la plage des états de charge relatifs totale en direction de résistances plus élevées au-dessus de la seconde courbe caractéristique de résistance interne de charge,
- la première caractéristique de résistance interne de décharge est située sur la plage des états de charge relatifs totale en direction de résistances plus élevées au-dessous de la seconde courbe caractéristique de résistance interne de décharge, et
- les deux accumulateurs d'énergie sont branchés l'un sur l'autre dans un état de tension neutre.

2. Véhicule conforme à la revendication 1,
**caractérisé en ce qu'**
à l'état proche de la pleine charge, le premier accumulateur d'énergie électrique a une tension de repos qui correspond essentiellement à l'état de charge du second accumulateur d'énergie dans des états de charge relatifs situés dans la plage inférieure à moyenne.

3. Véhicule conforme à la revendication 2,
**caractérisé en ce qu'**
- il comporte un capteur de batterie et au moins un appareil de commande,
- le capteur de batterie est associé au second accumulateur d'énergie, et
- par l'intégration en fonction du temps du courant de charge et du courant de décharge du second accumulateur d'énergie, l'état de charge du second accumulateur d'énergie peut être déterminé à l'aide du capteur de batterie et/ou de l'appareil de commande.

4. Procédé destiné à un véhicule conforme à la revendication 3, **caractérisé en ce que**
- lors de sa mise en oeuvre,
par appareil de commande un courant de charge en générateur du dispositif accumulateur d'énergie peut être réglé,
- un courant de décharge du dispositif accumulateur d'énergie lié au consommateur peut être réglé,
- le courant de charge et le courant de décharge maintiennent le second accumulateur d'énergie électrique lors de leur variation en fonction du temps dans une plage des états de charge de consigne, et
- la plage des états de charge de consigne est située essentiellement dans la plage d'état de charge médiane du second accumulateur d'énergie.

5. Procédé destiné à un véhicule conforme à la revendication 4, ce véhicule disposant d'une fonction de récupération de l'énergie de freinage, selon lequel,
- dans une phase de récupération, peut être réglée à l'aide de l'appareil de commande, un courant de charge en générateur qui conduit lors de ses variations en fonction du temps à un état de charge du second accumulateur d'énergie qui est situé, en direction des états de charge plus élevés au-dessus de la plage des états de charge de consigne, et
- dans des phases de déplacement qui ne correspondent pas à des phases de récupération, peuvent être réglées par l'appareil de commande par un courant de charge en générateur et un courant de décharge lié au consommateur de sorte que le courant de charge et le courant de décharge conduisent l'état de charge du second accumulateur d'énergie électrique lors de leurs variations en fonction du temps dans la plage des états de charge de consigne, ou maintiennent l'état de charge du second accumulateur d'énergie électrique lors de leurs variations en fonction du temps dans la plage des états de charge de consigne.

6. Procédé destiné à un véhicule conforme à la revendication 4 ou 5, ce véhicule disposant d'un système automatique d'arrêt et de démarrage du moteur selon lequel,
- dans une phase d'arrêt du moteur, est réglé, par l'appareil de commande, un courant de décharge qui, lors de ses variations en fonction du temps conduit à un état de charge du second accumulateur d'énergie qui est situé dans la direction des états de charge plus élevés ou au-dessous de la plage des états de charge de consigne, et
- dans des phases de déplacement qui ne correspondent pas à une phase d'arrêt du moteur est réglé par l'appareil de commande, un courant de charge en générateur et un courant de décharge lié au consommateur de sorte que le courant de charge et le courant de décharge conduisent à l'état de charge du second accumulateur d'énergie électrique, lors de leurs variations en fonction du temps dans la plage des états de charge de consigne ou maintiennent l'état de charge du second accumulateur d'énergie électrique, lors de leurs variations en fonction du temps dans la plage des états de charge de consigne.
